# EUROPEAN PATENT SPECIFICATION

(11) **EP 0 786 915 B1**
(45) Date of publication and mention of the grant of the patent: **29.12.2004**
(21) Application number: 97300381.7
(22) Date of filing: 21.01.1997
(51) Int. Cl.: H04Q 7/32

(54) **Subscriber/mobile terminal identifying device**
Teilnehmer-/Mobilgerät-Identifizierungseinrichtung
Dispositif d'identification d'un abonné/terminal mobile

(30) Priority: 23.01.1996 JP 2738896
(43) Date of publication of application: 30.07.1997
(73) Proprietor: KOKUSAI DENSHIN DENWA CO., LTD, Shinjuku-ku Tokyo (JP)
(72) Inventor: Suzuki, Toshinori, Itabashi-ku, Tokyo (JP); Yamaguchi, Akira, Toshima-ku, Tokyo (JP); Ohashi, Masayoshi, Kounosu-shi, Saitama (JP); Ito, Yoshihiko, Warabi-shi, Saitama (JP); Ota, Shinji, Nerima-ku, Tokyo (JP); Watanabe, Fumio, Fujimi-shi, Saitama (JP)
(74) Representative: Skone James, Robert Edmund

(56) References cited:
- DE-A- 4 118 993
- GB-A- 2 280 085
- LANTTO J: "ROAMING BETWEEN CELLULAR STANDARDS" ISS '95. WORLD TELECOMMUNICATIONS CONGRESS. (INTERNATIONAL SWITCHIN SYMPOSIUM), ADVANCED SWITCHING TECHNOLOGIES FOR UNIVERSAL TELECOMMUNICATIONS AT THE BEGINNING OF THE 21ST. CENTURY BERLIN, APR. 23 - 28, 1995, vol. VOL. 1, no. SYMP. 15, 23 April 1995, VERBAND DEUTSCHER ELEKTROTECHNIKER (VDE) ET AL, pages 241-245, XP000495572
- NODERA Y ET AL: "INTERWORKING BETWEEN GSM AND PDC THROUGH IC CARDS" COMMUNICATIONS - GATEWAY TO GLOBALIZATION. PROCEEDINGS OF THE CONFERENCE ON COMMUNICATIONS, SEATTLE, JUNE 18 - 22, 1995, vol. VOL. 2, 18 June 1995, INSTITUTE OF ELECTRICAL AND ELECTRONICS ENGINEERS, pages 761-765, XP000533114

## Description

The present invention relates to a subscriber / mobile terminal identifying device.

The subscriber / mobile terminal identifying device carries in general an identification (ID) number for identifying the mobile subscriber and/or the mobile terminal and also an authentication program for authenticating the mobile subscriber and/or the mobile terminal. As for examples of this identifying device, there are a memory device such as a ROM (Read Only Memory) accommodated in the mobile terminal housing and a SIM (Subscriber Identity Module) which is typically an IC card with CPU, detachable from the mobile terminal body. Since the ROM is mounted and fixed in the mobile terminal housing, the subscriber number stored in the ROM will be always coupled with the mobile terminal. Whereas, according to the SIM, the subscriber number can be separated from the mobile terminal and can be carried with the mobile subscriber (card roaming). The SIM is mostly constituted by the IC card with CPU, whose physical standard and electrical characteristics are internationally defined, or by an IC device.

Since the file structure, the authentication operation protocol and the input/output information format in each of the SIMs are different from each other depending upon the every communication method, correct identification of the mobile subscriber and/or the mobile terminal cannot be expected if the communication method adopted in the SIM is different from that adopted in the mobile terminal to which the SIM is to be attached. Thus, in that case, card roaming cannot be executed. In other words, according to the conventional art, the card roaming can be executed between the mobile networks adopting the same communication method but cannot be executed between the mobile networks adopting different communication methods such as PDC (Personal Digital Cellular) method which is Japanese standard communication method and GSM (Global System for Mobile communications) which is European standard communication method, respectively.

DE4118993 describes a SIM for accessing a mobile telephone system. The SIM has two subscriber numbers stored in separate memory locations, each number being for a respective network. Data processing ICs are embedded into the SIM and are each assigned to a respective network. The SIM simplifies access to the mobile telephone network and a general network.

The present invention relates to a subscriber/mobile terminal identifying device attachable to and detachable from mobile terminals, and provided with an identification number for identifying a mobile subscriber or a mobile terminal. Particularly, according to the present invention, the device includes an authentication program with a home mobile network format, either a conversion program for converting the home mobile network format into a visited mobile network format or a second authentication program with the visited mobile network format, and a plurality of memory areas corresponding to a plurality of mobile networks adopting communication methods different from each other, respectively so that the mobile subscriber or the mobile terminal can be identified in the plurality of mobile networks. The same identification number for identifying the mobile subscriber or the mobile terminal is stored in all the plurality of memory areas.

The present invention provides a subscriber/mobile terminal identifying device whereby the card roaming in mobile networks adopting a communication method different from that in the home network can be easily executed.

Therefore, by subscribing to only one mobile network and by getting at least one subscriber ID number or mobile terminal ID number, identification of the mobile subscriber or the mobile terminal is possible even in a visited mobile network which adopts a communication method different from that in the home mobile network. Thus, roaming operations among the different mobile networks adopting different communication methods can be realised by means of the SIM card.

Preferably, the device further includes means for distinguishing a communication method adopted in a mobile network in which the mobile subscriber is locating, based upon information given from a mobile terminal to which the device is attached, and means for allowing execution of the conversion program when the distinguished communication method belongs to the visited mobile network and for inhibiting the execution of the conversion program when the distinguished communication method belongs to the home mobile network.

Preferably, the device further includes means for distinguishing a communication method adopted in a mobile network in which the mobile subscriber is locating, based upon information given from a mobile terminal to which the device is attached, and means for selecting the second authentication program when the distinguished communication method belongs to the visited mobile network and for selecting the first authentication program when the distinguished communication method belongs to the home mobile network.

By converting the authentication operation format to that belonging to the visited mobile network or by selecting the authentication operation format belonging to the visited mobile network, authentication of the mobile subscriber or the mobile terminal can be easily executed in the different communication method's mobile networks by means of the single subscriber/mobile terminal identifying device.

It is preferred that the plurality of memory areas are mounted in a plurality of IC devices physically separated with each other, respectively, or in a single IC device.

In the latter case, the single IC device may contain a plurality of IC chips physically separated with each other and the plurality of memory areas are mounted in the plurality of IC chips, respectively, or the single IC device may contain a single IC chip and the plurality of memory areas are mounted in this IC chip.

Further objects and advantages of the present invention will be apparent from the following description of embodiments of the invention as illustrated in the accompanying drawings.
Fig. 1 shows a whole constitution of a communication system of an embodiment according to the present invention.
Fig. 2 schematically shows a mechanical structure of IC devices illustrated in Fig. 1.
Fig. 3 schematically shows a mechanical structure of the remaining IC device illustrated in Fig. 1.
Fig. 4 shows a file configuration example of a data memory area of an IC chip illustrated in Fig. 2.
Fig. 5 shows an another file configuration example of a data memory area of the IC chip illustrated in Fig. 2.
Fig. 6 shows a further file configuration example of a data memory area of the IC chip illustrated in Fig. 2.
Fig. 7 shows a file configuration example of a data memory area of the IC chip illustrated in Fig. 3.
Fig. 8 shows a still further file configuration example of a data memory area of the IC chip illustrated in Fig. 2.
Fig. 9 shows an another file configuration example of a data memory area of the IC chip illustrated in Fig. 2.
Fig. 10 shows an example of the IC chip with the file configuration illustrated in Fig. 7.
Fig. 11 shows an input/output structure of an authentication program illustrated in Fig. 10.
Fig. 12 shows an input/output structure of a FCP illustrated in Fig. 10.
Fig. 13 shows an another example of the IC chip with the file configuration illustrated in Fig. 7.
Fig. 14 shows an input/output structure of an authentication program illustrated in Fig. 13.
Fig. 15 shows an example of the IC chip with the file configuration illustrated in Fig. 8 or Fig. 9.
Fig. 16 shows an input/output structure of a controller illustrated in Fig. 15.
Fig. 17 shows an another example of the IC chip with the file configuration illustrated in Fig. 8 or Fig. 9.
Fig. 18 shows an input/output structure of a selector illustrated in Fig. 17.
Fig. 19 constituted by combining Figs. 19A and 19B shows an example of the identification and authentication operations at roaming by using an IC device provided with the IC chip illustrated in Fig. 10.
Fig. 20 constituted by combining Figs. 20A and 20B shows an example of the identification and authentication operations at roaming by using an IC device provided with the IC chip illustrated in Fig. 15.
Fig. 21 constituted by combining Figs. 21A and 21B shows an example of the identification and authentication operations at roaming by using an IC device provided with the IC chip illustrated in Fig. 17.

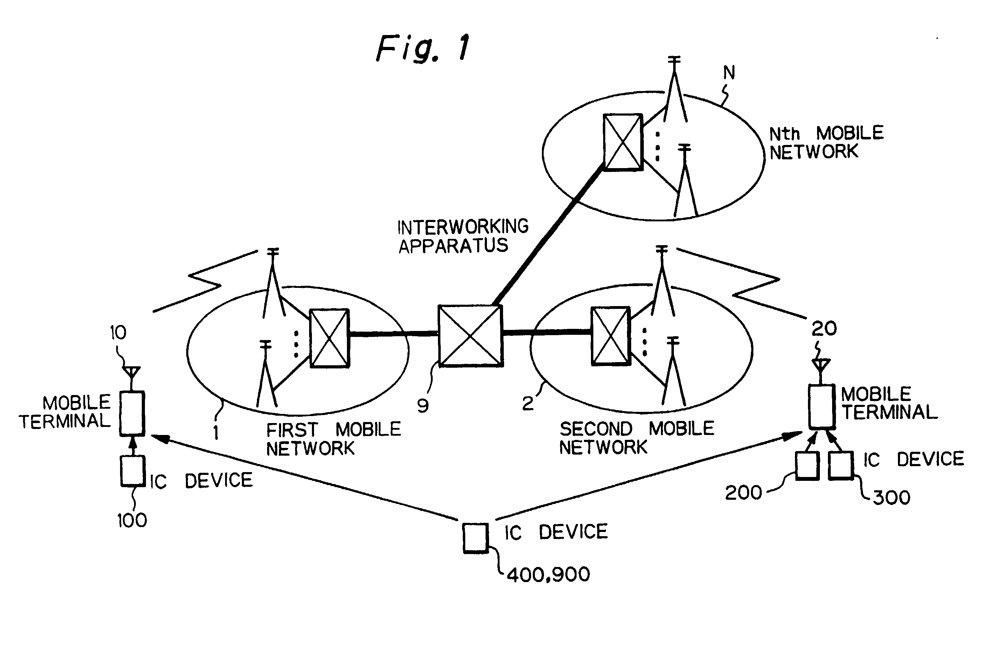

In Fig. 1, reference numerals 1, 2 and N denote first, second and Nth mobile networks which respectively adopt different communication methods, 9 denotes an interworking apparatus provided at the network side for roaming among these mobile networks adopting the different communication methods, 10 denotes a mobile terminal using the communication method belonging to the first mobile network 1, 20 denotes a mobile terminal using the communication method belonging to the second mobile network 2, and 100, 200, 300, 400 and 900 denote IC devices which are freely attachable to and detachable from the mobile terminals, respectively.

The IC device 100 is the conventional IC device and has the specification for the communication method belonging to the first mobile network 1. This IC device 100 is utilized by a user subscribed to the first mobile network 1 when this user accesses to this first mobile network 1 or to a mobile network adopting the same communication method as that of the first mobile network 1. The IC device 200 is also the conventional IC device and has the specification for the communication method belonging to the second mobile network 2. This IC device 200 is utilized by a user subscribed to the second mobile network 2 when this user accesses to this second mobile network 2 or to a mobile network adopting the same communication method as that of the second mobile network 2.

The IC device 300 is provided according to the present invention. This IC device 300 is utilized by a user subscribed to the first mobile network 1 when this user accesses (roams) to the second mobile network 2. The IC device 400 is also provided according to the present invention. This IC device 400 is utilized by a user subscribed to the first mobile network 1 when this user accesses to the first mobile network 1 and also when the user accesses (roams) to the second mobile network 2. The IC device 900 is provided according to the present invention. This IC device 900 is utilized by a user subscribed to the first mobile network 1 when this user accesses to the first mobile network 1 and also when the user accesses (roams) to the second mobile network 2.

There are following three kinds of a subscriber / mobile terminal identifying device provided for a mobile subscriber who made a subscriber contract with the first mobile network 1 and, as an additional service, made a roaming contract with the second mobile network 2 (hereinafter called as a roaming-contracted subscriber).
(1) a subscriber / mobile terminal identifying device constituted by both the IC device 100 and the IC device 300,
(2) a subscriber / mobile terminal identifying device constituted by the IC device 400, and
(3) a subscriber / mobile terminal identifying device constituted by the IC device 900.

The IC device which may be typically constituted by a smart card accommodates an IC chip and its basement. The IC chip mainly consists of a CPU and at least one memory. The basement is a card type base for mounting the IC chip. The shape of the basement and the position for mounting the IC device on the basement are defined by the international standard (ISO-7816). However, all the IC devices for the various mobile networks will not completely correspond to ISO-7816 as in the present invention.

The IC device according to the present invention is constituted by a 8 bits CPU and at least one memory with a capacity of several kilo bytes. The bit number and memory capacity may be optionally increased in future.

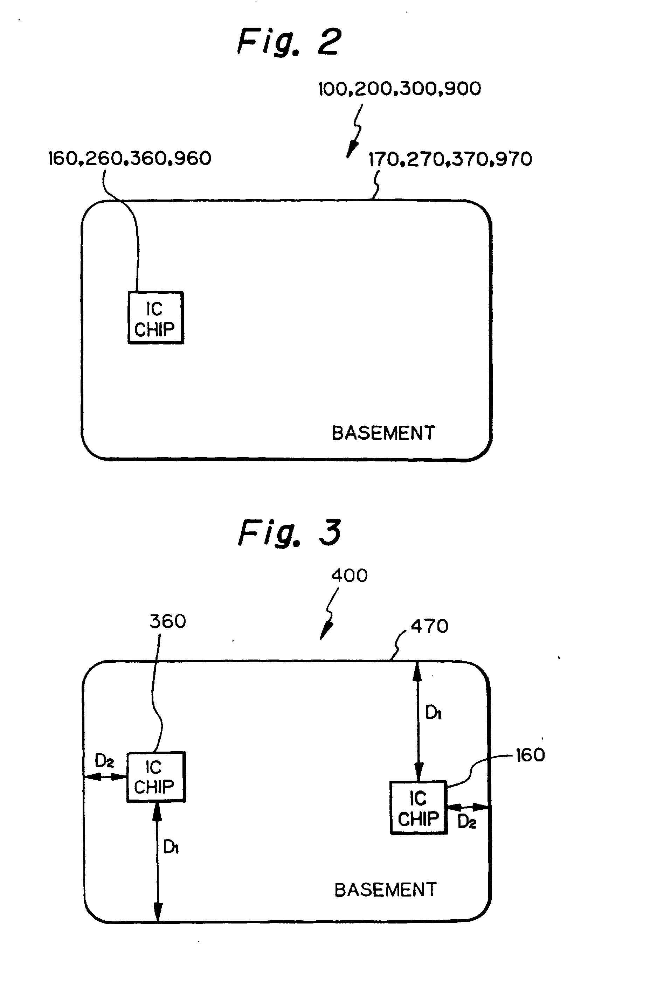

Fig. 2 schematically shows a mechanical structure example of the IC devices 100, 200, 300 or 900 shown in Fig. 1. The IC devices 100, 200, 300 and 900 have IC chips 160, 260, 360 and 960 and basements 170, 270, 370 and 970, respectively.

Fig. 3 schematically shows a mechanical structure example of the IC device 400 shown in Fig. 1. The IC device 400 has two IC chips 160 and 360 mounted on a common card type basement 470. Since these IC chips have the same configurations as the IC chip 160 on the IC device 100 and the IC chip 360 on the IC device 300, the same reference numerals are given, respectively. As shown in Fig. 3, these two IC chips 160 and 360 are mounted at the respective end portions on the same surface of the basement 470 so that the mounted positions of these IC chips are symmetry with respect to the center point of the basement 470. In other words, the IC chips 160 and 360 are mounted at the positions with the same space D₁ from the respective side edges of the basement and with the same space D₂ from the respective end edges of the basement. It is possible to mount the two IC chips 160 and 360 on the opposite surfaces of the basement 470, respectively. By inverting the inserting direction of the former IC device 400 into the mobile terminal or by turning over the inserting surface of the latter IC device 400, it is possible to commonly use these IC devices 400 for both the mobile terminals 10 and 20. The IC device 400 provides the similar function as that of the two IC devices 100 and 300.

Table 1 shows the IC chips mounted on the respective IC devices.

**Table 1**

| IC device | IC chip |
|---|---|
| 100 | 160 |
| 200 | 260 |
| 300 | 360 |
| 400 | 160 and 360 |
| 900 | 960 |

Each of the IC chips has a program memory area for storing operation programs and a data memory area for storing data. Typical configuration of the memory areas in the IC chip applied for the IC device is defined by the ISO and thus the following description will use the terms defined in the ISO.

In general, each of the memory areas in the IC chip has a multi-layered file structure constituted by a plurality of EFs (Elementary Files) for storing data, at least one DF (Dedicated File) for managing for example security information of the EFs, and a MF (Master File) for managing all the file in the IC chip. The one DF will generally manage the plurality of EFs. The DF is prepared for every application of the IC device.

Actual file configuration of the memory areas in the IC chip mounted on the IC device will be determined, based upon this file structure, in accordance with the communication methods belonging to the first mobile network 1 and to the second mobile network 2.

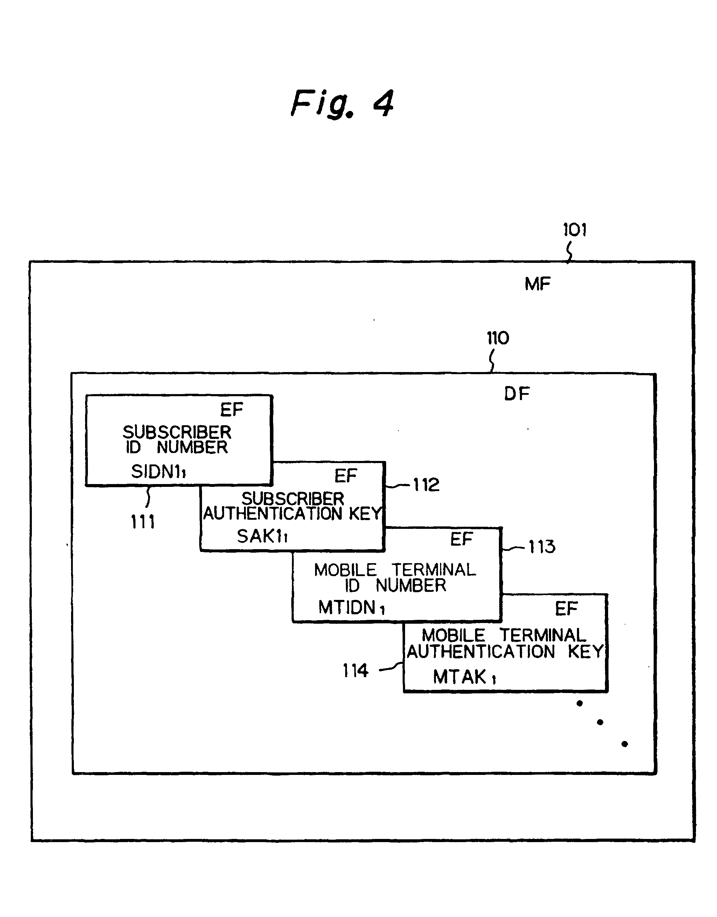

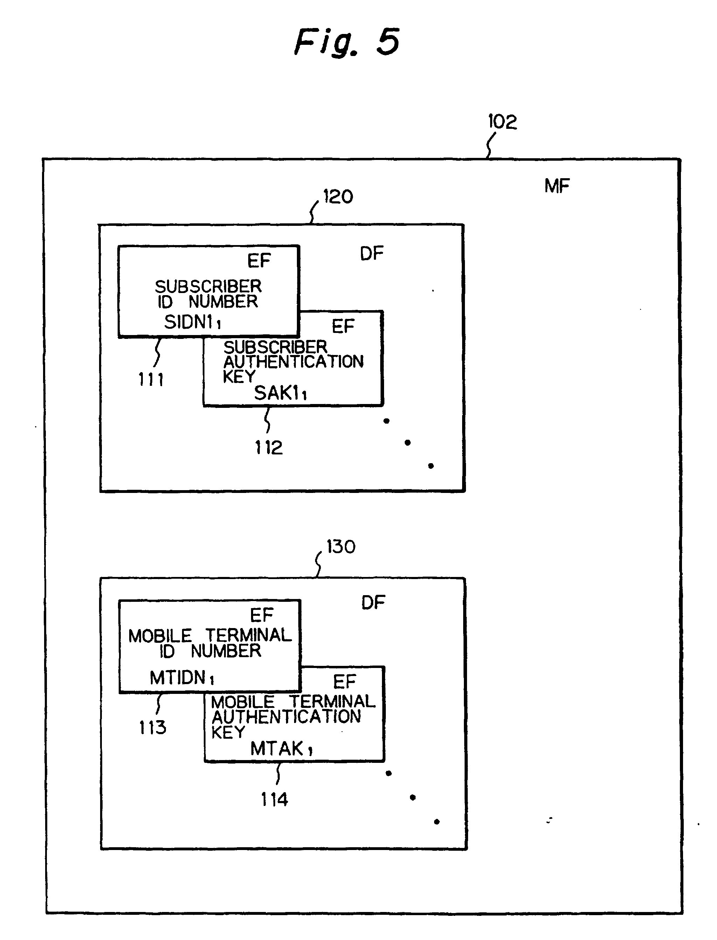

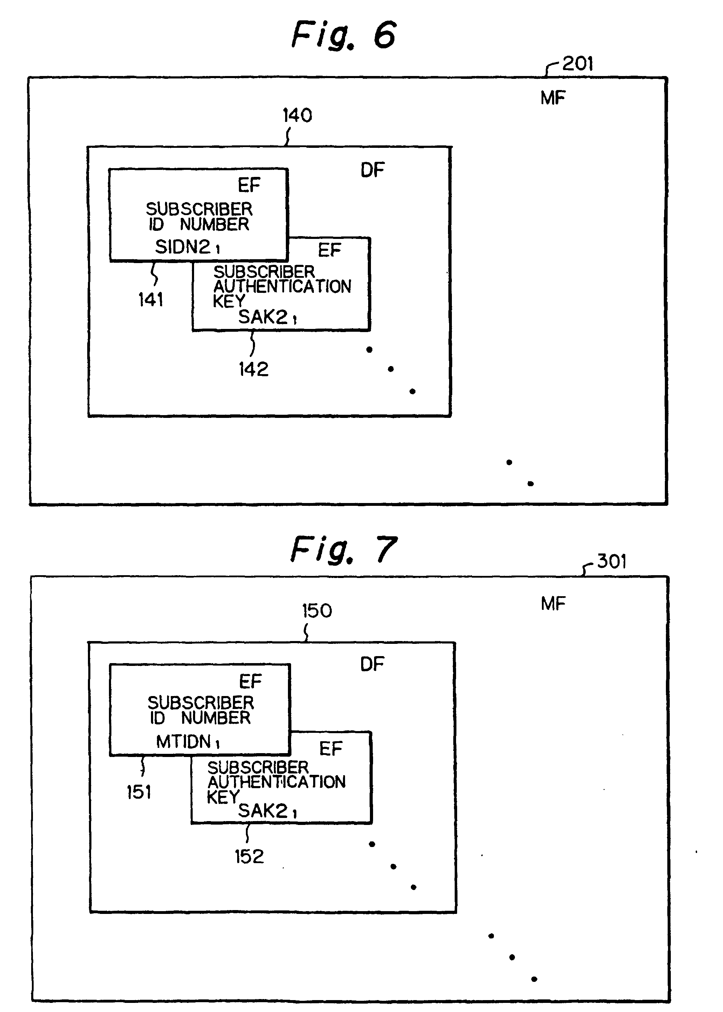

In order to easily understand the present invention, file configurations of the conventional IC chips will be first described with reference to Figs. 4 to 6. Figs. 4 and 5 show conventional file configuration examples of the data memory area of the IC chip 160 mounted on the IC device 100 which is conformed to the communication method belonging to the first mobile network 1, and Fig. 6 shows a conventional file configuration example of the data memory area of the IC chip 260 mounted on the IC device 200 which is conformed to the communication method belonging to the second mobile network 2. Supposing that, in this embodiment, the first mobile network 1 adopts the communication method for managing both the mobile subscriber and the mobile terminal by means of IC device, such as the PDC method, whereas the second mobile network 2 adopts the communication method for managing only the mobile subscriber by means of the IC device, such as the GSM method.

In the example shown in Fig. 4, the IC chip 160 in the IC device 100 has EF 111 for storing a subscriber ID (identification) number SIDN1₁, EF 112 for storing a subscriber authentication key SAK1₁, EF 113 for storing a mobile terminal ID number MTIDN₁ and EF 114 for storing a mobile terminal authentication key MTAK₁, which are given at the first mobile network system 1. The IC chip 160 also has DF 110 for managing these EFs and, MF 101 for managing all files in this IC chip 160. As shown in the example of Fig. 5, the configuration of the IC chip 160 may be modified so that DF 120 manages the EF 111 for storing the subscriber ID number SIDN1₁ and the EF 112 for storing the subscriber authentication key SAK1₁, and that DF 130 manages the EF 113 for storing the mobile terminal ID number MTIDN₁ and the EF 114 for storing the mobile terminal authentication key MTAK₁. In this case, all files in the IC chip 160 are managed by MF 102.

In the example shown in Fig. 6, the IC chip 260 in the IC device 200 has EF 141 for storing a subscriber ID number SIDN2₁ and EF 142 for storing a subscriber authentication key SAK2₁, which are given at the second mobile network system 2. The IC chip 260 also has DF 140 for managing these EFs and MF 201 for managing all files in this IC chip 260.

It is to be noted that, in this embodiment according to the present invention, the mobile terminal ID number MTIDN₁ for the first mobile network 1 and the subscriber ID number SIDN2₁ for the second mobile network 2 use the same data space (same memory space). Also, the subscriber authentication key SAK1₁ and the mobile terminal authentication key MTAK₁ for the first mobile network 1 have 64 bits width, and the subscriber authentication key SAK2₁ for the second mobile network 2 has 128 bits width.

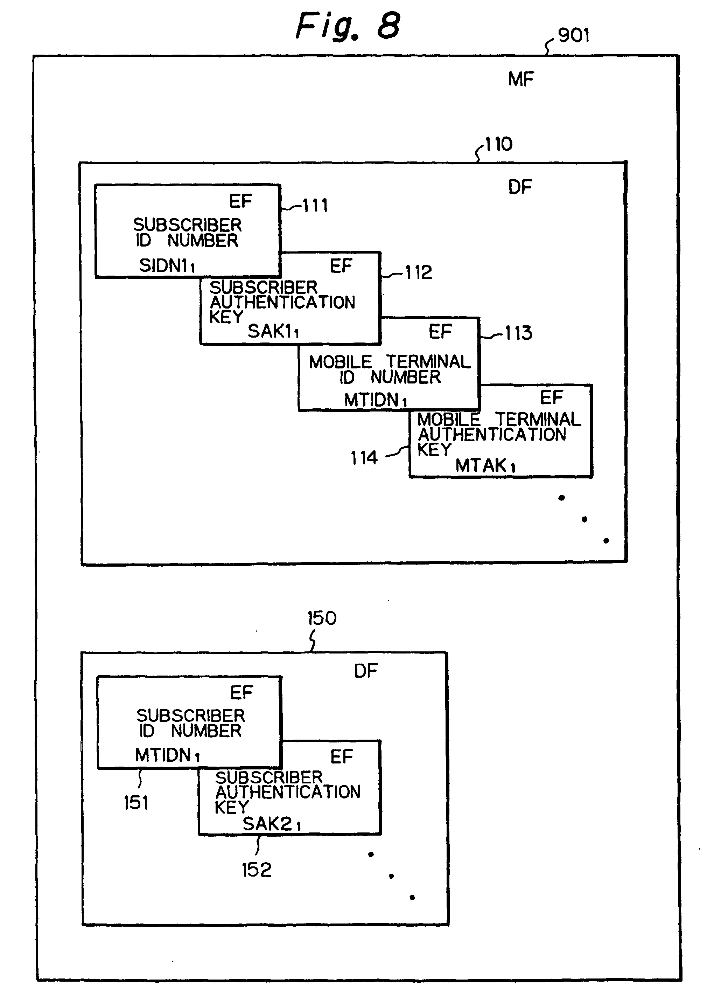

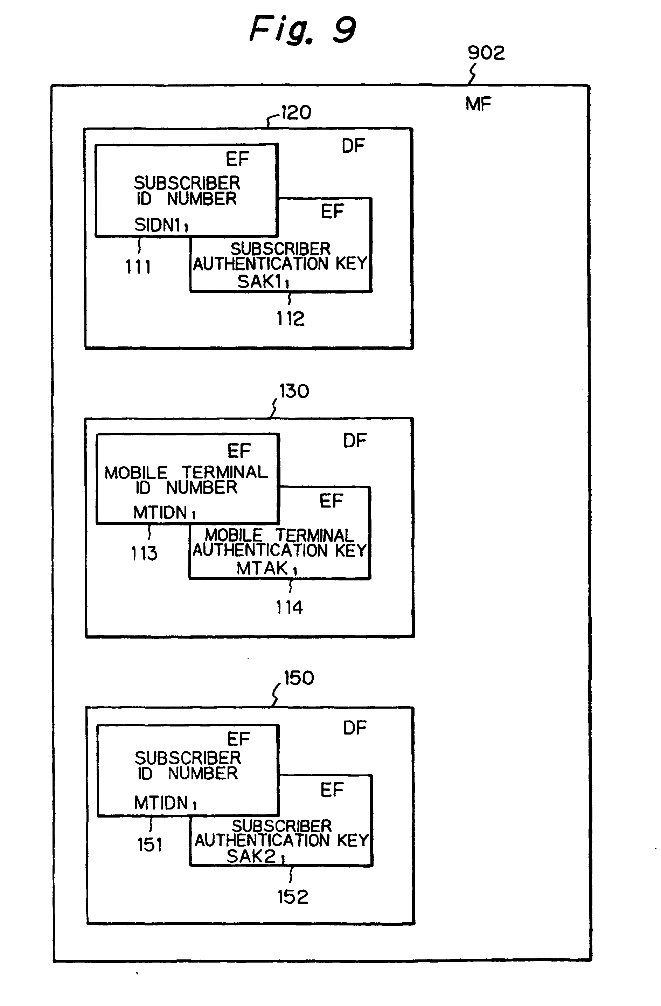

Fig. 7 shows a file configuration example of the data memory area of the IC chip 360 mounted on the IC device 300 or 400, and Figs. 8 and 9 show file configuration examples of the data memory area of the IC chip 960 mounted on the IC device 900, according to the present invention. In each of these examples, there is DF 150 used for the roaming operation in the second mobile network 2 (visited network).

In the example shown in Fig. 7, the IC chip 360 in the IC device 300 or 400 has EF 151 for storing a subscriber ID number which is the same value as that of the mobile terminal ID number MTIDN₁ given at the first mobile network 1 (home network) to the roaming-contracted subscriber, and EF 152 for storing a subscriber authentication key SAK2₁ given at the second mobile network system 2. The IC chip 360 also has DF 150 for managing these EFs, and MF 301 for managing all files in this IC chip 360.

As will be understood, according to this example, a number which is the same as the mobile terminal ID number MTIDN₁ given to the roaming-contracted subscriber at the home network is stored in the memory area EF 151 as the subscriber ID number managed by the DF 150 which is conformed with the communication method in the second mobile network 2 (visited network). At the network side, it may be necessary to provide the interworking apparatus 9 having the similar function for roaming among the mobile networks adopting the different communication methods. An example of such interworking apparatus is described in EP application No.96112977.2 published as EP-A-0758835 and filed on August 13, 1996 by the same applicant as this application.

Instead of the mobile terminal ID number MTIDN₁ given to the roaming-contracted subscriber at the home network, a number obtained by modifying, in accordance with the network ID number or the country number, the subscriber ID number SIDN1₁ which is given to the roaming-contracted subscriber at the home network can be stored in the memory area EF 151 as the subscriber ID number managed by the DF 150. In general, the subscriber ID number and the mobile terminal ID number will contain the country number or the manufacturer's code. However, if the mobile network is provided within a single country or if the mobile network is monopolized by a single manufacturer, these country number and the manufacturer's code may be omitted. In the latter case, a number which is the same as the subscriber ID number SIDN1₁ will be stored in the memory area EF 151 as the subscriber ID number managed by the DF 150.

The subscriber authentication key SAK2₁ managed by the DF 150 can be provided by the interworking apparatus 9 or by the first mobile network 1. In this embodiment, the subscriber authentication key SAK2₁ is provided based upon the subscriber authentication key SAK1₁ and the mobile terminal authentication key MTAK₁ given at first the mobile network 1.

In the example shown in Fig. 8, the IC chip 960 in the IC device 900 has the DF 110 which contains the EFs 111 to 114 shown in Fig. 4, the DF 150 which contains the EFs 151 and 152 shown in Fig. 7, and MF 901 for managing all files in this IC chip 960.

According to this example, a number which is the same as the mobile terminal ID number MTIDN₁ given to the roaming-contracted subscriber at the home network and stored in the EF 113 managed by the DF 110 is also stored in the memory area EF 151 as the subscriber ID number managed by the DF 150 which is conformed to the communication method in the second mobile network 2.

In the example shown in Fig. 9, the IC chip 960 in the IC device 900 has the DF 120 which contains the EFs 111 and 112 shown in Fig. 5, the DF 130 which contains the EFs 113 and 114 shown in Fig. 5, the DF 150 which contains the EFs 151 and 152 shown in Fig. 7, and MF 902 for managing all files in this IC chip 960.

According to this example, a number which is the same as the mobile terminal ID number MTIDN₁ given to the roaming-contracted subscriber at the home network and stored in the EF 113 managed by the DF 130 is also stored in the memory area EF 151 as the subscriber ID number managed by the DF 150 which is conformed to the communication method in the second mobile network 2.

In the aforementioned data memory area MF 301 (Fig. 7) in the IC chip 360 with respect to the IC devices 300 and 400, only the DF 150 for the second mobile network 2 is accommodated. Therefore, this IC chip 360 is applicable only when the roaming-contracted subscriber accesses to this second mobile network 2 (visited network). Whereas, in the aforementioned data memory areas MF 901 (Fig. 8) and MF 902 (Fig. 9) in the IC chip 960 with respect to the IC device 900, the DFs for both the first mobile network 1 and the second mobile network 2 are accommodated. Therefore, this IC chip 960 is applicable when the roaming-contracted subscriber accesses not only to the first mobile network 1 (home network) but also to the second mobile network 2 (visited network).

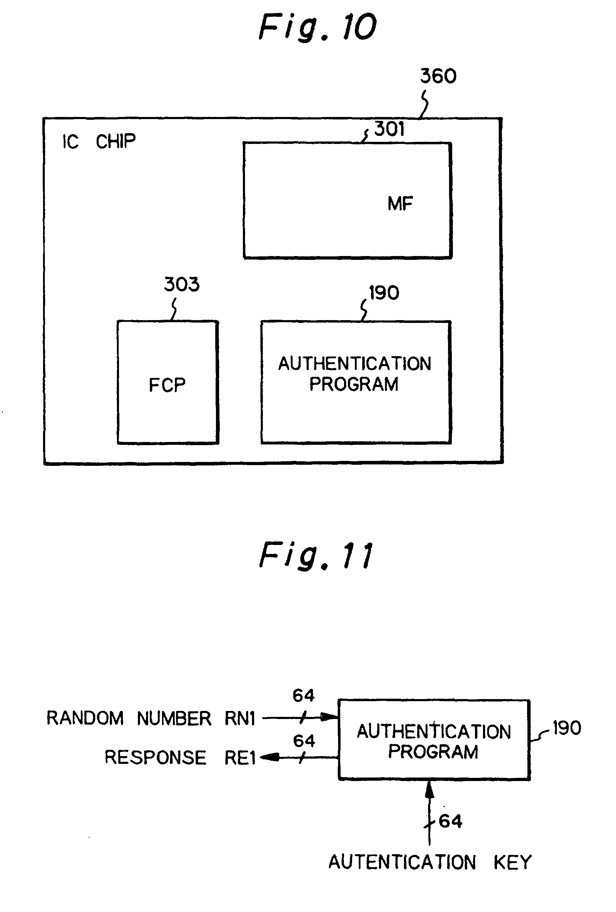

Fig. 10 shows an example of the IC chip 360 with respect to the IC devices 300 and 400. In this example, as shown in the figure, the IC chip 360 has, other than the above-mentioned MF 301, an authentication program 190 and a FCP (Format Conversion Program) 303 for executing the conversion of data format between the first and second mobile networks 1 and 2.

The authentication program 190 is made to execute the authentication operation in accordance with the communication method belonging to the first mobile network 1. As shown in Fig. 11, an authentication key of 64 bits width and a random number RN1 of 64 bits width are input into or selected for this authentication program 190 and a response RE1 of 64 bits width is output from the program 190. This authentication program 190 is the same as that in the IC chip 160.

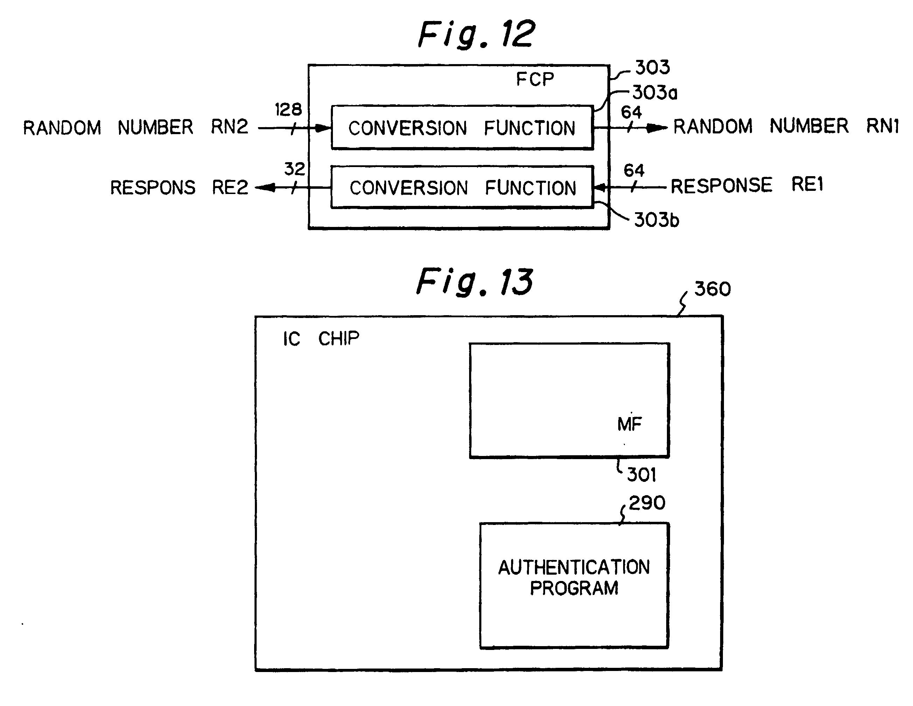

The FCP 303 contains, as shown in Fig. 12, a first conversion function 303a for converting a random number RN2 of 128 bits width to the random number RN1 of 64 bits width, and a second conversion function 303b for converting the response RE1 of 64 bits width to a response RE2 of 32 bits width. By using this FCP 303 and the authentication program 190 together, authentication in the second mobile network 2 can be executed. Such conversion functions are described in EP application No.95103605.2 published as EP0673178A2 filed by the same applicant as this application.

Fig. 13 shows an another example of the IC chip 360 with respect to the IC devices 300 and 400. In this example, as shown in the figure, the IC chip 360 has, other than the above-mentioned MF 301, an authentication program 290.

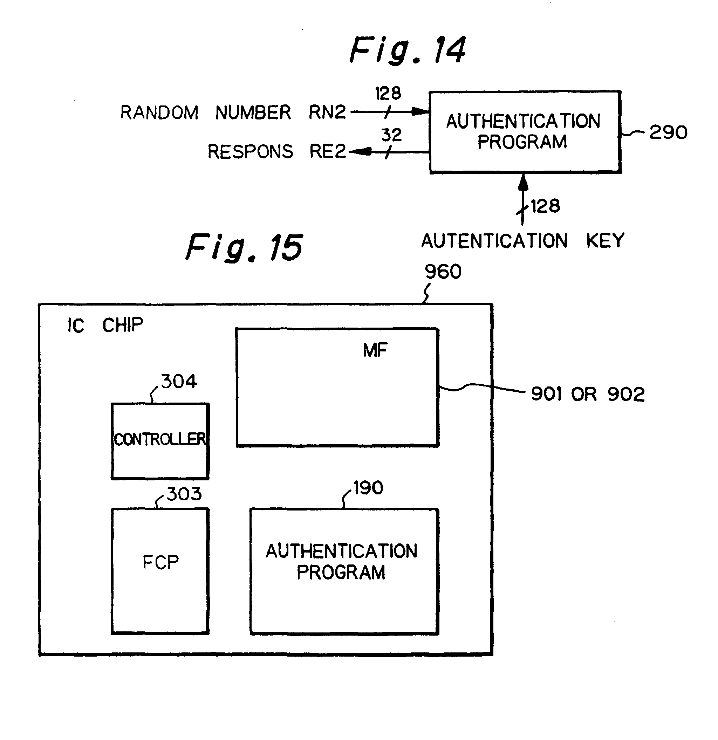

The authentication program 290 is made to execute the authentication operation in accordance with the communication method belonging to the second mobile network 2. As shown in Fig. 14, an authentication key of 128 bits width and a random number RN2 of 128 bits width are input into or selected for this authentication program 290 and a response RE2 of 32 bits width is output from the program 290. This authentication program 290 is the same as that in the IC chip 260.

As will be understood from the above-explanation, the IC chip 360 has at least one of the authentication program 190 and the authentication program 290. The FCP 303 is necessarily accompanied with the authentication program 190.

Fig. 15 shows an example of the IC chip 960 with respect to the IC device 900. In this example, as shown in the figure, the IC chip 960 has, other than the above-mentioned MF 901 or MF 902, the authentication program 190, the FCP 303 for executing the conversion of data format between the first and second mobile networks 1 and 2, and a controller 304 for distinguishing the communication method belonging to the visited network to provide a control signal.

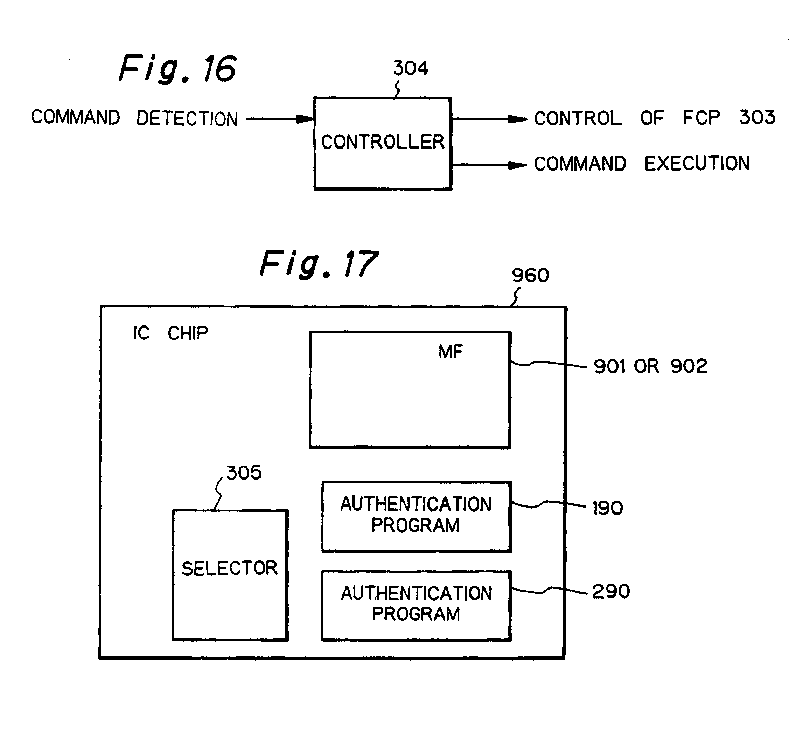

The controller 304 is, as shown in Fig. 16, made to distinguish the network in which the roaming-contracted subscriber is locating from the first and second mobile networks 1 and 2 based upon the detected command provided from the mobile terminal to the IC chip 960, and to control the conversion operation of the FCP 303 in accordance with the distinguished result. The command used for distinction is for example the selection command of the DF, code of the authentication command, parameter(s) accompanied with the authentication command or the length of the authentication command.

Fig. 17 shows an another example of the IC chip 960 with respect to the IC device 900. In this example, as shown in the figure, the IC chip 960 has, other than the above-mentioned MF 901 or MF 902, the authentication program 190, the authentication program 290, and a selector 305 for distinguishing the communication method belonging to the visited network to select one of the authentication programs 190 and 290.

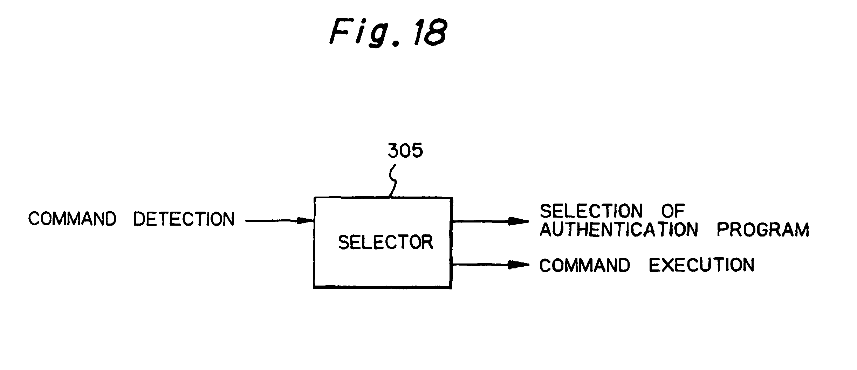

The selector 305 is, as shown in Fig. 18, made to distinguish the network in which the roaming-contracted subscriber is locating from the first and second mobile networks 1 and 2 based upon the detected command provided from the mobile terminal to the IC chip 960, and to select one of the authentication programs in accordance with the distinguished result. The command used for distinction is for example the selection command of the DF, code of the authentication command, parameter(s) accompanied with the authentication command or the length of the authentication command.

Table 2 shows the aforementioned file configurations and programs in the respective IC chips 160, 260, 360 and 960.

**Table 2**

| IC chip | file configuration | program |
|---|---|---|
| 160 | MF 101 or MF 102 | 190 |
| 260 | MF 201 | 290 |
| 360 | MF 301 | (190 + 303) or 290 |
| 960 | MF 901 or MF 902 | (190 + 303 + 304) or (190 + 290 + 305) |

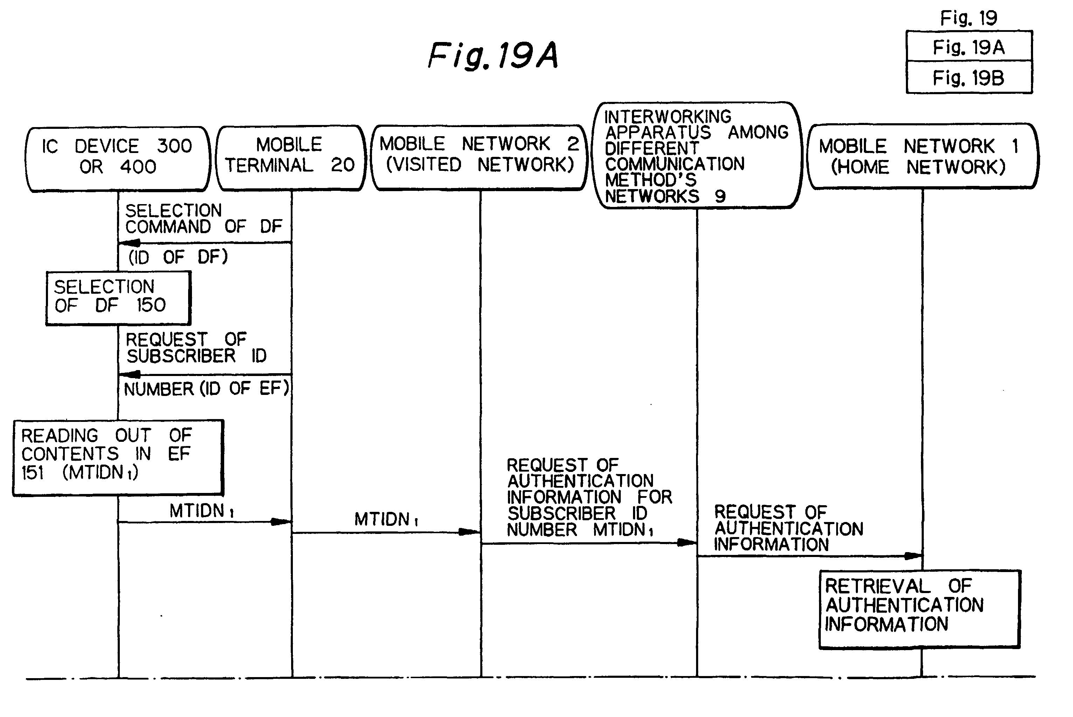

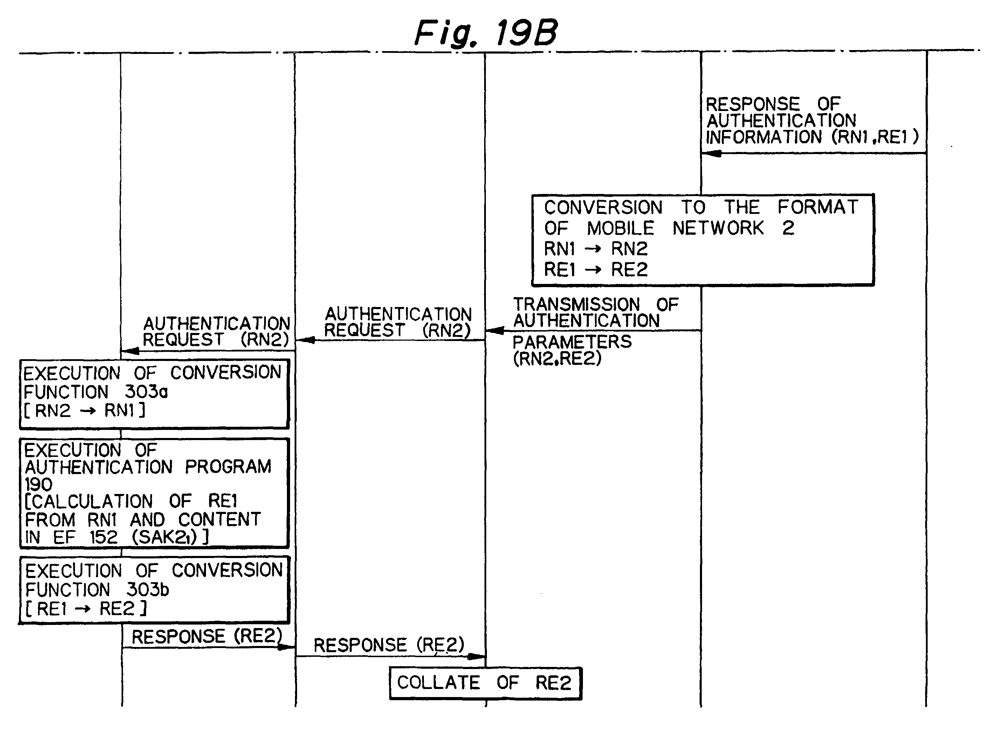

Fig. 19 shows an example of the identification and authentication operations at roaming by using the IC device 300 or 400 with the IC chip 360 illustrated in Fig. 10.

In order to access in the second mobile network 2 (visited network), the roaming-contracted subscriber will first mount the IC device 300 or 400 to the mobile terminal 20. Thus, the mobile terminal 20 transmits a command for selecting the DF 150 (ID of the DF 150) which is conformed to the second mobile network 2 to the IC chip 360 of the mounted IC device. As a result, the IC chip 360 actually selects the DF 150. Then, the mobile terminal 20 requests, to the IC chip 360, to get the subscriber ID number stored in the EF 151 which is managed by the DF 150. Thus, the subscriber ID number stored in the EF 151, which is the same as the mobile terminal ID number MTIDN₁ given to the roaming-contracted subscriber at the home network, is read out and transmitted from the IC chip 360 to the second mobile network 2 via the mobile terminal 20.

Typically, the subscriber ID number is constituted by the country number with respect to the mobile subscriber, the network number of the home network and the subscriber number. Since the subscriber ID number MTIDN₁ is one given by the system of the first mobile network 1, the second mobile network 2 can judge, based upon its country number and network number, that this mobile subscriber is a visiting subscriber from another network.

The second mobile network 2 presents the subscriber ID number MTIDN₁ and requests (interrogates) to obtain the authentication information with respect to this roaming-contracted subscriber to the interworking apparatus among different communication method's networks 9. This authentication information request has the format belonging to the second mobile network 2. The interworking apparatus 9 converts the format of this authentication information request accompanied with the presented subscriber ID number MTIDN₁ into the format belonging to the first mobile network 1 and then transmits it to the first mobile network 1.

The first mobile network 1 thus retrieves an authentication information of the roaming-contracted subscriber in accordance with the presented subscriber ID number MTIDN₁. According to this retrieval, the authentication information containing the random number RN1 and the response RE1 are obtained. Since the subscriber authentication key SAK2₁ of this roaming-contracted subscriber, used in the second mobile network 2 was decided based upon the subscriber authentication key SAK1₁ and the mobile terminal authentication key MTAK₁ used in the first mobile network 1, the first mobile network 1 can know this subscriber authentication key SAK2₁ and therefore can calculate the response RE1.

The obtained authentication information has the format belonging to the first mobile network 1, and therefore it is necessary to convert it into the format belonging to the second mobile network 2 at the interworking apparatus 9 or at the first mobile network 1 before transmission to the second mobile network 2.

In the example of Fig. 19, this conversion is executed by using conversion functions in the interworking apparatus 9. One of the conversion functions is a function for converting the random number RN1 of 64 bits width to a random number RN2 of 128 bits width. This function is inverse to the first conversion function 303a in the FCP 303 shown in Fig. 12. The other one of the conversion functions is that for converting the response RE1 of 64 bits width to a response RE2 of 32 bits width. The latter function is the same as the second conversion function 303b in the FCP 303. The subscriber authentication parameters RN2 and RE2 thus converted to the format belonging to the second mobile network 2 are transmitted from the interworking apparatus 9 to the second mobile network 2.

The second mobile network 2 informs the random number RN2 to the IC chip 360 via the mobile terminal 20 and instructs the IC chip 360 to execute the authentication operation. Thus, in the IC chip 360, the first conversion function 303a in the FCP 303 converts the random number RN2 to the random number RN1 in the format belonging to the first mobile network 1. The converted random number RN1 is then delivered to the authentication program 190. The authentication program 190 calculates a response RE1 based upon the delivered random number RN1 and the subscriber authentication key SAK2₁ stored in the EF 152 which is managed by the DF 150. Then, the second conversion function 303b in the FCP 303 converts the response RE1 to the response RE2 in the format belonging to the second mobile network 2. The calculated and converted response RE2 is transmitted to the second mobile network 2 via the mobile terminal 20. In the second mobile network 2, the transmitted response RE2 is collated with the response from the interworking apparatus 9 and accordingly the authentication of the roaming-contracted subscriber is completed.

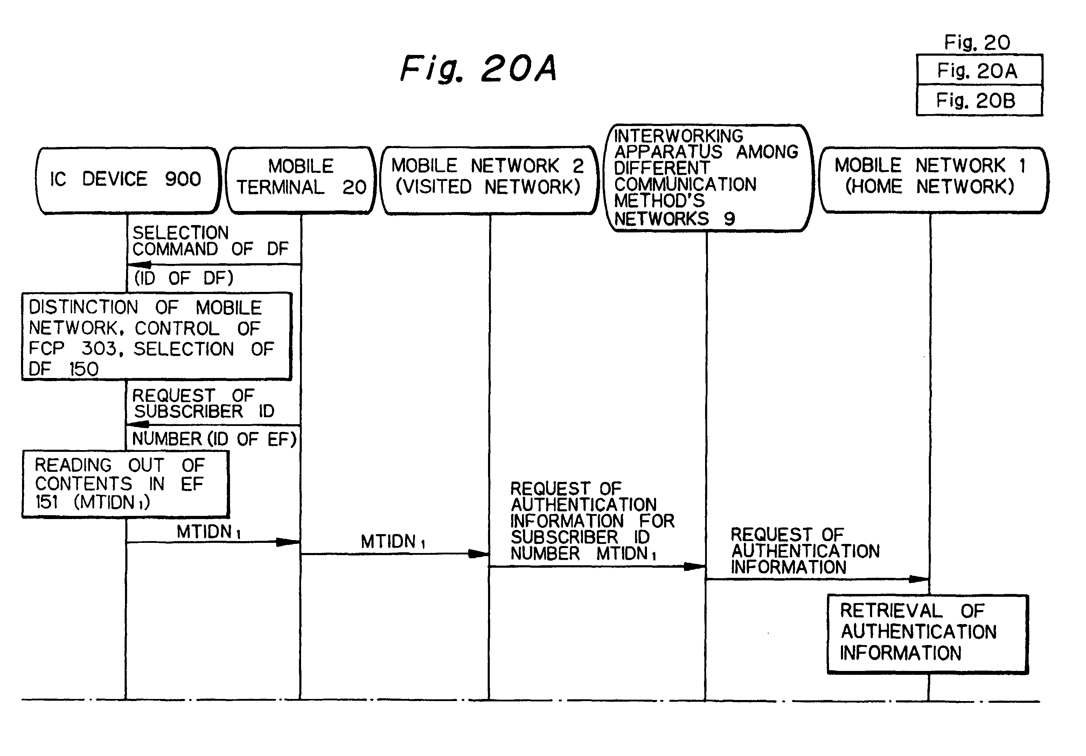

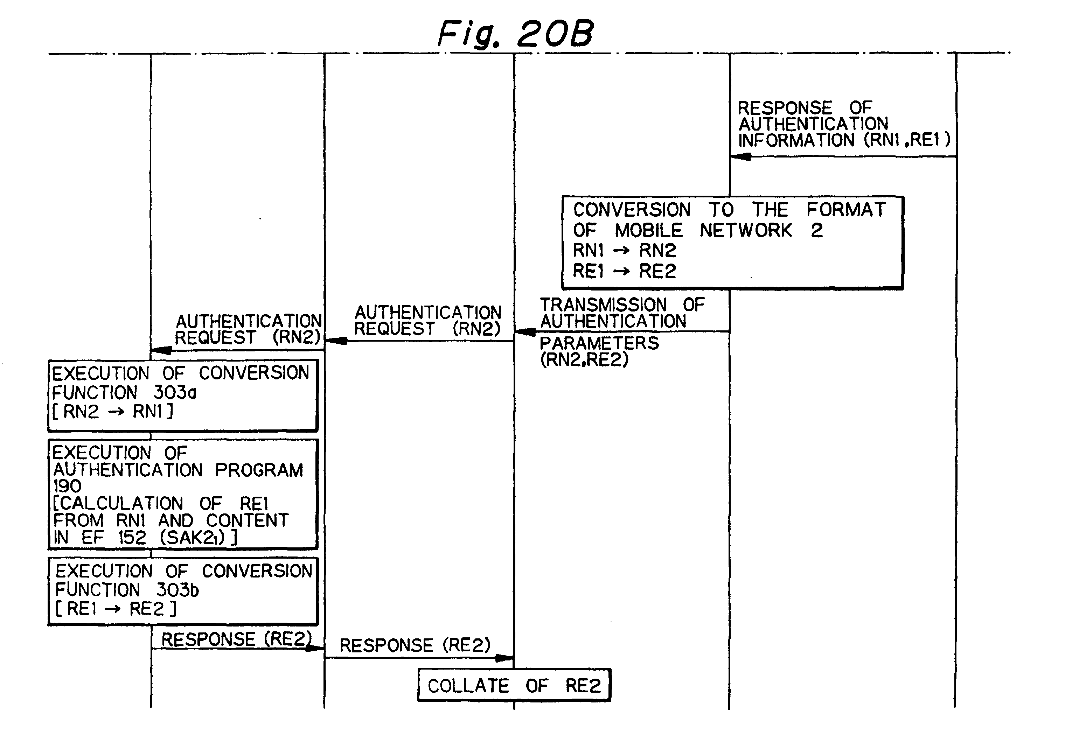

Fig. 20 shows an example of the identification and authentication operations at roaming by using the IC device 900 with the IC chip 960 illustrated in Fig. 15.

In order to access in the second mobile network 2 (visited network), the roaming-contracted subscriber will first mount the IC device 900 to the mobile terminal 20. Thus, the mobile terminal 20 transmits a command for selecting the DF 150 (ID of the DF 150) which is conformed to the second mobile network 2 to the IC chip 960 of the mounted IC device. As a result, the controller 304 in the IC chip 960 distinguishes that the visiting network is the second mobile network 2 or the network adopting the same communication method as the second mobile network 2, and controls so that the FCP 303 executes the conversion operation. Also, the IC chip 960 selects the DF 150. Then, the mobile terminal 20 requests, to the IC chip 960, to get the subscriber ID number stored in the EF 151 which is managed by the DF 150. Thus, the subscriber ID number stored in the EF 151, which is the same as the mobile terminal ID number MTIDN₁ given to the roaming-contracted subscriber at the home network, is read out and transmitted from the IC chip 960 to the mobile terminal 20. Subsequent operations of the IC chip 960 are completely the same as those of the IC chip 360 described with reference to Fig. 19.

If the roaming-contracted subscriber mounts the IC device 900 to the mobile terminal 10 to access to the first mobile network 1 (home network), the mobile terminal 10 transmits a selection command for the DF 110 or for the DFs 120 and 130 to the IC chip 960. Thus, the controller 304 in the IC chip 960 distinguishes that this network is the first mobile network 1 or the network adopting the same communication method as the first mobile network 1, and controls so that the FCP 303 will not execute the conversion operation. Also, the IC chip 960 selects the DF 110 or the DFs 120 and 130.

Thus, the IC chip 960 can be used not only in the second mobile network 2 (visited network) but also in the first mobile network 1 (home network) in contrast with the IC chip 360. The controller 304 distinguishes the network in which the roaming-contracted subscriber is accessing from the first and second mobile networks 1 and 2, and controls the conversion operation of the FCP 303 in accordance with the distinguished result. If it is distinguished that the roaming-contracted subscriber is in the first mobile network 1, since the authentication program 190 can be used without conversion, the conversion operation of the FCP 303 is stopped so as to execute no conversion of the random number and the response. If it is distinguished that the roaming-contracted subscriber is visiting in the second mobile network 2, the conversion operation described with reference to Fig. 19 is executed.

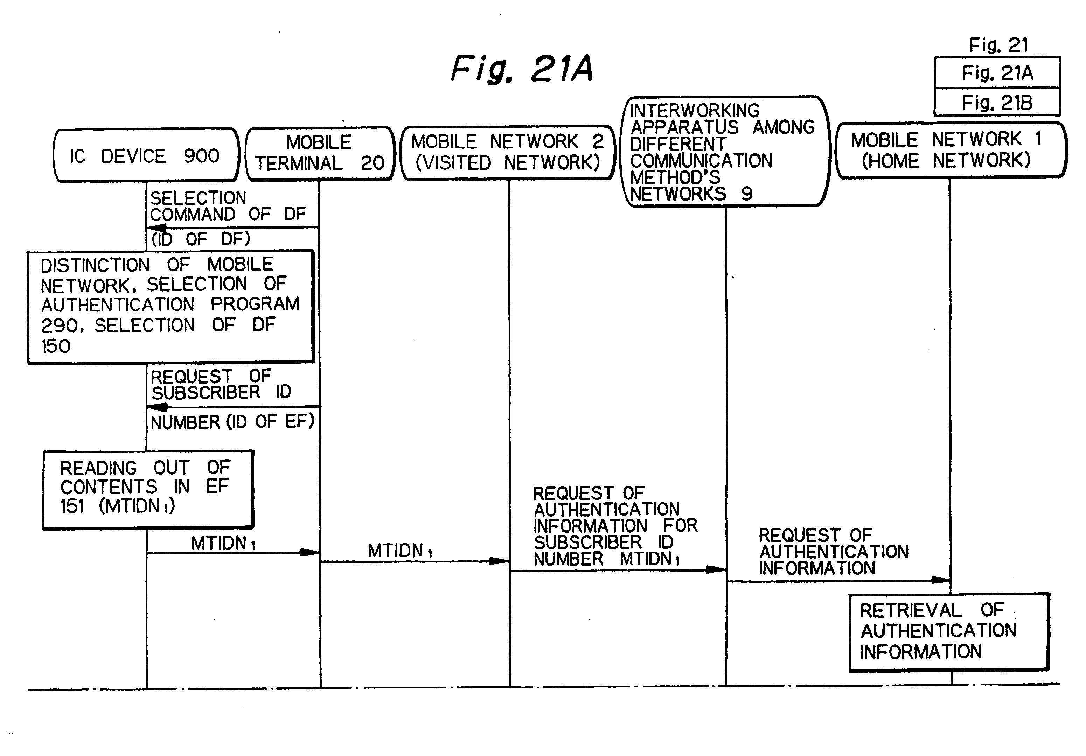

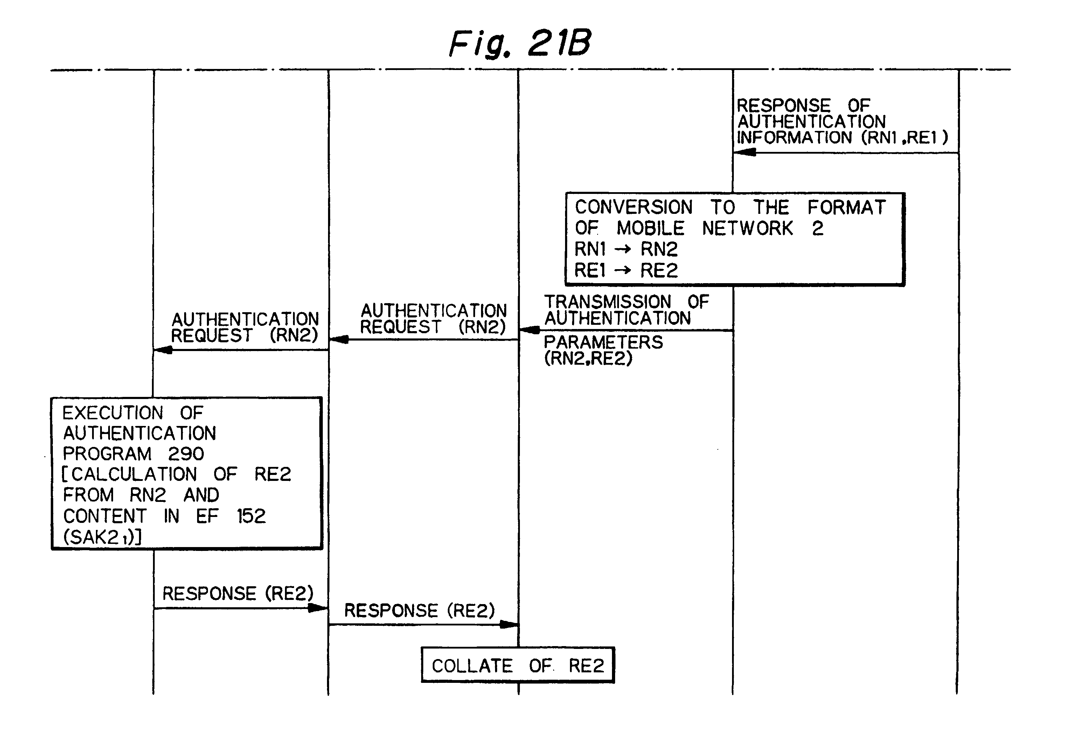

Fig. 21 shows an example of the identification and authentication operations at roaming by using the IC device 900 with the IC chip 960 illustrated in Fig. 17.

In order to access in the second mobile network 2 (visited network), the roaming-contracted subscriber will first mount the IC device 900 to the mobile terminal 20. Thus, the mobile terminal 20 transmits a command for selecting the DF 150 (ID of the DF 150) which is conformed to the second mobile network 2 to the IC chip 960 of the mounted IC device. As a result, the selector 305 in the IC chip 960 distinguishes that the visiting network is the second mobile network 2 or the network adopting the same communication method as the second mobile network 2, and selects the authentication program 290. Also, the IC chip 960 selects the DF 150. Then, the mobile terminal 20 requests, to the IC chip 960, to get the subscriber ID number stored in the EF 151 which is managed by the DF 150. Thus, the subscriber ID number stored in the EF 151, which is the same as the mobile terminal ID number MTIDN₁ given to the roaming-contracted subscriber at the home network, is read out and transmitted from the IC chip 960 to the second mobile network 2 via the mobile terminal 20.

Typically, the subscriber ID number is constituted by the country number with respect to the mobile subscriber, the network number of the home network and the subscriber number. Since the subscriber ID number MTIDN₁ is one given by the system of the first mobile network 1, the second mobile network 2 can judge, based upon its country number and network number, that this mobile subscriber is a visiting subscriber from another network.

The second mobile network 2 presents the subscriber ID number MTIDN₁ and requests (interrogates) to obtain the authentication information with respect to this roaming-contracted subscriber to the interworking apparatus among different communication method's networks 9. This authentication information request has the format belonging to the second mobile network 2. The interworking apparatus 9 converts the format of this authentication information request accompanied with the presented subscriber ID number MTIDN₁ into the format belonging to the first mobile network 1 and then transmits it to the first mobile network 1.

The first mobile network 1 thus retrieves an authentication information of the roaming-contracted subscriber in accordance with the presented subscriber ID number MTIDN₁. According to this retrieval, the authentication information containing the random number RN1 and the response RE1 are obtained. Since the subscriber authentication key SAK2₁ of this roaming-contracted subscriber, used in the second mobile network 2 was decided based upon the subscriber authentication key SAK1₁ and the mobile terminal authentication key MTAK₁ used in the first mobile network 1, the first mobile network 1 can know this subscriber authentication key SAK2₁ and therefore can calculate the response RE1.

The obtained authentication information has the format belonging to the first mobile network 1, and therefore it is necessary to convert it into the format belonging to the second mobile network 2 at the interworking apparatus 9 or at the first mobile network 1 before transmission to the second mobile network 2.

In the example of Fig. 21, this conversion is executed by using conversion functions in the interworking apparatus 9. One of the conversion functions is a function for converting the random number RN1 of 64 bits width to a random number RN2 of 128 bits width. This function is inverse to the first conversion function 303a in the FCP 303 shown in Fig. 12. The other one of the conversion functions is that for converting the response RE1 of 64 bits width to a response RE2 of 32 bits width. The latter function is the same as the second conversion function 303b in the FCP 303. The subscriber authentication parameters RN2 and RE2 thus converted to the format belonging to the second mobile network 2 are transmitted from the interworking apparatus 9 to the second mobile network 2.

The second mobile network 2 informs the random number RN2 to the IC chip 960 via the mobile terminal 20 and instructs the IC chip 960 to execute the authentication operation. Thus, in the IC chip 960, the authentication program 290 calculates a response RE2 based upon the random number RN2 and the subscriber authentication key SAK2₁ stored in the EF 152 which is managed by the DF 150. The calculated response RE2 is transmitted to the second mobile network 2 via the mobile terminal 20. In the second mobile network 2, the transmitted response RE2 is collated with the response from the interworking apparatus 9 and accordingly the authentication of the roaming-contracted subscriber is completed.

If the roaming-contracted subscriber mounts the IC device 900 to the mobile terminal 10 to access to the first mobile network 1 (home network), the mobile terminal 10 transmits a selection command for the DF 110 or for the DFs 120 and 130 to the IC chip 960. Thus, the selector 305 in the IC chip 960 distinguishes that this network is the first mobile network 1 or the network adopting the same communication method as the first mobile network 1, and selects the authentication program 190. Also, the IC chip 960 selects the DF 110 or the DFs 120 and 130.

Thus, the IC chip 960 can be used not only in the second mobile network 2 (visited network) but also in the first mobile network 1 (home network) in contrast with the IC chip 360. As aforementioned, the selector 305 distinguishes the network in which the roaming-contracted subscriber is accessing from the first and second mobile networks 1 and 2, and selects the authentication program in accordance with the distinguished result. If it is distinguished that the roaming-contracted subscriber is in the first mobile network 1, the authentication program 190 is selected. If it is distinguished that the roaming-contracted subscriber is visiting the second mobile network 2, the authentication program 290 is selected.

As aforementioned, by using the IC device 300 with the IC chip 360, the IC device 400 with the IC chips 360 and 160 and the IC device 900 with the IC chip 960, the roaming-contracted subscriber can access to the second mobile network 2 (visited network) with the communication method different from that adopted by the first mobile network 1 (home network) without modifying the mobile terminal 20.

As will be understood from the above-description, according to the present invention, identification and authentication of the subscriber and therefore roaming communication can be executed in the different communication method's mobile networks by means of a single subscriber/ mobile terminal identifying device. Also, since there is a single subscriber or mobile terminal number among the different communication method's mobile networks, data space for the ID number can be effectively utilized. Furthermore, since the difference of the communication methods is absorbed at the subscriber side by means of the subscriber/ mobile terminal identifying device, the roaming communication can be carried out without modifying the mobile terminal of the visited network.

## Claims

1. A subscriber / mobile terminal identifying device (400) attachable to and detachable from mobile terminals (10), and provided with an identification number for identifying a mobile subscriber or a mobile terminal (10), **characterized in that** said device includes an authentication program (190) with a home mobile network format, either a conversion program for converting the home mobile network format into a visited mobile network format or a second authentication program (290) with the visited mobile network format, and a plurality of memory areas corresponding to a plurality of mobile networks (1) adopting communication methods different from each other, respectively so that the mobile subscriber or the mobile terminal (10) can be identified in said plurality of mobile networks (1), and that the same identification number for identifying said mobile subscriber or said mobile terminal (10) is stored in all the plurality of memory areas.

2. A device as claimed in claim 1, wherein said device further includes means for distinguishing a communication method adopted in a mobile network in which the mobile subscriber is locating, based upon information given from a mobile terminal to which said device is attached, and means for allowing execution of said conversion program when said distinguished communication method belongs to said visited mobile network and for inhibiting the execution of said conversion program when said distinguished communication method belongs to said home mobile network.

3. A device as claimed in claim 1, wherein said device further includes means for distinguishing a communication method adopted in a mobile network in which the mobile subscriber is locating, based upon information given from a mobile terminal to which said device is attached, and means for selecting said second authentication program when said distinguished communication method belongs to said visited mobile network and for selecting said first authentication program when said distinguished communication method belongs to said home mobile network.

4. A device as claimed in any one of claims 1 to 3, wherein said plurality of memory areas are mounted in a plurality of IC devices physically separated with each other, respectively.

5. A device as claimed in any one of claims 1 to 3, wherein said plurality of memory areas are mounted in a single IC device.

6. A device as claimed in claim 5, wherein said single IC device contains a plurality of IC chips physically separated with each other, and wherein said plurality of memory areas are mounted in said plurality of IC chips, respectively.

7. A device as claimed in claim 5, wherein said single IC device contains a single IC chip, and wherein said plurality of memory areas are mounted in said single IC chip.

## Patentansprüche

1. Teilnehmer-/Mobilgerät-Identifizierungseinrichtung (400), die an Mobilgeräten (10) anschließbar und von diesen lösbar und mit einer Identifizierungsnummer zum Identifizieren eines Mobilfunkteilnehmers oder eines Mobilgeräts (10) versehen ist, **dadurch gekennzeichnet, daß** die Einrichtung aufweist: ein Authentifizierungsprogramm (190) mit einem Heim-Mobilfunknetzformat, und zwar entweder ein Umsetzungsprogramm zum Umsetzen des Heim-Mobilfunknetzformats in das Format eines aufgesuchten Mobilfunknetzes oder ein zweites Authentifizierungsprogramm (290) mit dem Format des aufgesuchten Mobilfunknetzes, und eine Vielzahl von Speicherbereichen, die einer Vielzahl von Mobilfunknetzen (1) entsprechen, die jeweils voneinander abweichende Kommunikationsverfahren anwenden, so daß der Mobilfunkteilnehmer oder das Mobilgerät (10) in der Vielzahl von Mobilfunknetzen (1) identifiziert werden kann, und daß die gleiche Identifizierungsnummer zur Identifizierung des Mobilfunkteilnehmers oder des Mobilgeräts (10) in jedem der Vielzahl von Speicherplätzen gespeichert ist.

2. Einrichtung nach Anspruch 1, die ferner Mittel zum Unterscheiden eines in einem Mobilfunknetz, in dem sich der Mobilfunkteilnehmer befindet, angewandten Kommunikationsverfahrens auf der Basis von Informationen aus dem Mobilgerät, an dem die Einrichtung angebracht ist, und Mittel zur Gewährung der Ausführung des Umsetzprogramms, wenn das unterschiedene Kommunikationsverfahren zu dem aufgesuchten Mobilfunknetz gehört, und zum Verhindern der Ausführung des Umsetzprogramms, wenn das unterschiedene Kommunikationsverfahren zu dem Heim-Mobilfunknetz gehört, aufweist.

3. Einrichtung nach Anspruch 1, die ferner aufweist: Mittel zum Unterscheiden eines Kommunikationsverfahrens, das in einem Mobilfunknetz angewandt wird, in dem sich der Mobilfunkteilnehmer befindet, auf der Basis von Informationen, die aus einem Mobilgerät übermittelt werden, an dem die Einrichtung angebracht ist, und Mittel zum Auswählen des zweiten Authentifizierungsprogramms, wenn das unterschiedene Kommunikationsverfahren zu dem aufgesuchten Mobilfunknetz gehört, und zum Auswählen des ersten Authentifizierungsprogramms, wenn das unterschiedene Kommunikationsverfahren zu dem Heim-Mobilfunknetz gehört.

4. Einrichtung nach einem der Ansprüche 1 bis 3, bei der die Vielzahl von Speicherbereichen in einer Vielzahl von integrierten Schaltungsanordnungen angeordnet ist, die jeweils physisch voneinander getrennt sind.

5. Einrichtung nach einem der Ansprüche 1 bis 3, bei der die Vielzahl von Speicherbereichen in einer einzigen integrierten Schaltungsanordnung angeordnet ist.

6. Einrichtung nach Anspruch 5, bei der die einzige integrierte Schaltungsanordnung eine Vielzahl von integrierten Schaltungschips enthält, die physisch voneinander getrennt sind, und bei der die Vielzahl von Speicherplätzen jeweils in der Vielzahl von integrierten Schaltungschips angeordnet ist.

7. Einrichtung nach Anspruch 5, bei der die einzige integrierte Schaltungsanordnung einen einzigen integrierten Schaltungschip aufweist und die Vielzahl von Speicherplätzen in dem einzigen integrierten Schaltungschip angeordnet ist.

## Revendications

1. Dispositif (400) d'identification d'abonné ou de terminal mobile, pouvant être attaché à des terminaux mobiles (10), et en être détaché, ledit dispositif étant doté d'un numéro d'identification permettant d'identifier un abonné mobile ou un terminal mobile (10), **caractérisé en ce qu'**il comporte un programme d'authentification (190) ayant un format de réseau de mobiles d'origine, l'un des deux programmes suivants, à savoir un programme de conversion permettant de convertir le format de réseau de mobiles d'origine en un format de réseau de mobiles visité ou bien un deuxième programme d'authentification (290) ayant le format de réseau de mobiles visité, et une pluralité de zones de mémoire correspondant à une pluralité de réseaux de mobiles (1) adoptant des procédés de communication différents les uns des autres, respectivement, de façon que l'abonné mobile ou le terminal mobile (10) puisse être identifié dans ladite pluralité de réseaux de mobiles (1), et **en ce que** le même numéro d'identification permettant d'identifier ledit abonné mobile ou ledit terminal mobile (10) est stocké dans toutes les zones de la pluralité de zones de mémoire.

2. Dispositif selon la revendication 1, lequel dispositif comporte en outre un moyen permettant de distinguer un procédé de communication adopté dans un réseau de mobiles dans lequel l'abonné mobile se trouve, sur la base d'informations données de la part d'un terminal mobile auquel ledit dispositif est attaché, et un moyen servant à autoriser l'exécution dudit programme de conversion lorsque ledit procédé de communication distingué appartient audit réseau de mobiles visité et à empêcher l'exécution dudit programme de conversion lorsque ledit procédé de communication distingué appartient audit réseau de mobiles d'origine.

3. Dispositif selon la revendication 1, lequel dispositif comporte en outre un moyen permettant de distinguer un procédé de communication adopté dans un réseau de mobiles dans lequel l'abonné mobile se trouve, sur la base d'informations données de la part d'un terminal mobile auquel ledit dispositif est attaché, et un moyen permettant de sélectionner ledit deuxième programme d'authentification lorsque ledit procédé de communication distingué appartient audit réseau de mobiles visité et de sélectionner ledit premier programme d'authentification lorsque ledit procédé de communication distingué appartient audit réseau de mobiles d'origine.

4. Dispositif selon l'une quelconque des revendications 1 à 3, où les zones de ladite pluralité de zones de mémoire sont respectivement montées dans une pluralité de dispositifs à circuit intégré matériellement séparés les uns des autres.

5. Dispositif selon l'une quelconque des revendication 1 à 3, où les zones de ladite pluralité de zones de mémoire sont montées dans un unique dispositif à circuit intégré.

6. Dispositif selon la revendication 5, où ledit dispositif à circuit intégré unique comprend une pluralité de puces de circuit intégré matériellement séparées les unes des autres, et où les zones de ladite pluralité de zones de mémoire sont respectivement montées dans ladite pluralité de puces de circuit intégré.

7. Dispositif selon la revendication 5, où ledit dispositif à circuit intégré unique contient une unique puce de circuit intégré, et où les zones de ladite pluralité de zones de mémoire sont montées dans ladite puce unique de circuit intégré.
